# EUROPÄISCHE PATENTANMELDUNG

(11) **EP 3 037 220 A1**
(43) Veröffentlichungstag der Anmeldung: **29.06.2016**
(21) Anmeldenummer: 15195595.2
(22) Anmeldetag: 20.11.2015
(51) Int. Cl.: B25J 9/16

(54) **OVERRIDE BASIERTE VORAUSSCHAUENDE GESCHWINDIGKEITSKAPPUNG**

(30) Priorität: 23.12.2014 DE 102014226914
(71) Anmelder: KUKA Roboter GmbH, 86165 Augsburg (DE)
(72) Erfinder: TRONNIER, Holger, 86163 Augsburg (DE); AURNHAMMER, Andreas, 81929 München (DE); WIEDEMANN, Günther, 86368 Gersthofen (DE); HÜTTENHOFER, Manfred, 86405 Meitingen (DE); BURKHART, Stefan, 89407 Dillingen a. d. Donau (DE)
(74) Vertreter: Mader, Joachim

(57) **Zusammenfassung**

Die vorliegende Erfindung betrifft ein Verfahren zum Steuern eines Manipulators, wobei sich das Verfahren insbesondere eignet, um vorgegebene Überwachungsgrenzen einzuhalten. Das erfindungsgemäße Verfahren umfasst dabei ein Einleiten einer Anhalte-Bewegung oder eine Geschwindigkeitskappung basierend auf einen ermittelten Ist-Override-Verlauf. Somit eignet sich das erfindungsgemäße Verfahren insbesondere für Bahnbewegungen mittels Spline-Interpolation.

## Beschreibung

### 1. Technischer Bereich

Die vorliegende Erfindung betrifft ein Verfahren zum Steuern eines Manipulators, um insbesondere sicherzustellen, dass vorgegebene Überwachungsgrenzen eingehalten werden.

### 2. Technischer Hintergrund

Roboter, und insbesondere Industrieroboter sind frei programmierbare, programmgesteuerte Handhabungsgeräte. Die eigentliche Robotermechanik wird als Manipulator bezeichnet. Dieser kann aus einer Anzahl an beweglichen, aneinander geketteten Gliedern oder auch Achsen bestehen, welche die kinematische Kette des Roboters definieren. Die kinematische Kette erstreckt sich üblicherweise vom Roboterfuß zum Flansch des Roboters, oder falls vorhanden, zu einem mit dem Flansch verbundenen Werkzeug.

Die Bewegung der einzelnen Achsen eines Roboters kann dabei durch eine gezielte Regelung von Antrieben erfolgen, welche mit den einzelnen Komponenten des Manipulators verbunden sind. Für eine Bewegung zwischen einzelnen Punkten können während der Programmierung eines Roboterprogramms gewisse Parameter, wie beispielsweise die Geschwindigkeit, vorgegeben werden.

Im Betrieb kann ein Bediener über ein Bediensystem einen Roboter steuern und Betriebsparameter einstellen. Hierbei können insbesondere unterschiedliche Betriebsarten eingestellt werden, wie beispielsweise die nach der Sicherheitsnorm EN ISO 10218-1:2006 definierten Betriebsarten "manuell reduzierte Geschwindigkeit", in welcher eine maximale Geschwindigkeit des Roboterflansch und des Werkzeugmittelpunkts oder Werkzeugarbeitspunkts (engl.: tool center point, TCP) auf 250 mm/s begrenzt wird, "manuelle hohe Geschwindigkeit" oder "Automatik", in welchen Geschwindigkeiten entsprechend der Programmierung gefahren werden können.

Um zu garantieren, dass sich beispielsweise in der Betriebsart "manuell reduzierte Geschwindigkeit" der Flansch und der TCP nicht schneller als 250 mm/s bewegen, sind entsprechende Überwachungsmodule in der Robotersteuerung implementiert, welche bei Verletzung einer Geschwindigkeitsgrenze einen geeigneten Stopp auslösen können. Im Allgemeinen überwacht eine Sicherungssteuerung dabei verschiedene Ist-Werte, wie beispielsweise die Geschwindigkeit des Flansches. Wenn eine entsprechende Grenze überschritten wird, reagiert sie entsprechend ihrer Spezifikation.

Neben den Geschwindigkeitsgrenzen für Flansch und TCP werden häufig auch achsspezifische Grenzen festgelegt, wie beispielsweise maximale Achsgeschwindigkeiten. Vor allem in der Betriebsart "manuell reduzierte Geschwindigkeit" ist eine maximale Achsgeschwindigkeit vorteilhaft, um Menschen, die während dieser Betriebsart mit einem Roboter einen Arbeitsraum teilen können, zu schützen.

Ein häufiges Durchbrechen von Überwachungsgrenzen und Eingreifen der Sicherungssteuerung kann die Bedienbarkeit eines Roboters deutlich beeinträchtigen. Um dies zu vermeiden, ist aus einem betriebsinternen Verfahren bekannt, den Roboter durch Eingreifen in die Override-Regelung, bzw. durch implizite Regelung des Override-Wertes zu steuern. Der Override selbst beschreibt eine Ableitung der Zeitskalierung zwischen Echtzeit und Systemzeit. Beispielsweise würde bei einem Programm-Override-Wert von 75% eine geplante Bahn mit einer programmieten Geschwindigkeit von 200 mm/s nur mit 150 mm/s gefahren werden.

In dem betriebsinternen Verfahren wird ausgenutzt, dass die Signale zwischen der Steuerung und den Antrieben mittels eines sogenannten

Achsfilters geglättet werden. Durch Regeln des Override-Wertes in der Robotersteuerung kann es zu kurzfristigen Geschwindigkeitsüberhöhungen kommen, die allerdings vorteilhaft durch den Achsfilter hinreichend geglättet werden können, sodass keine Überwachungsgrenzen überschritten werden.

Die bekannten Verfahren eignen sich allerdings nicht, um alle Überwachungsgrenzen stets sauber einzuhalten und gleichzeitig eine hohe Bedienbarkeit bzw. Beweglichkeit des Roboters zu erlauben. Insbesondere wenn eine Bahnbewegung mittels Spline-Interpolation ausgeführt wird, um komplizierte Raumkurven mit hoher Genauigkeit abzufahren, kann das oben beschriebene Verfahren nicht verwendet werden, da bei einer Bahnbewegung mittels Spline-Interpolation keine Achsfilter verwendet werden, um vorteilhaft ein präzises, unverfälschtes Fahren des Roboters bzw. Werkzeugs zu ermöglichen.

Der vorliegenden Erfindung liegt somit die Aufgabe zugrunde, eine Methode bereitzustellen, welche eine geeignete Geschwindigkeitskappung, insbesondere für eine Bahnbewegung mittels Spline-Interpolation, ermöglicht. Es ist ferner eine Aufgabe der vorliegenden Erfindung eine Methode bereitzustellen, welche ein präzises Einhalten von Überwachungsgrenzen garantiert.

Diese und weitere Aufgaben, welche aus der folgenden detaillierten Beschreibung deutlicher werden, werden durch den Gegenstand der unabhängigen Ansprüche gelöst.

### 3. Inhalt der Erfindung

Die Erfindung umfasst ein Verfahren zum Steuern eines Manipulators, und insbesondere zum Steuern eines Gelenkarmroboters. Der Manipulator wird dabei vorzugsweise anhand einer Bahnplanung und unterschiedlichen Parametern, wie beispielsweise eines Soll-Override-Wertes gesteuert. Das erfindungsgemäße Verfahren umfasst ein Simulieren, in einem momentanen Takt tₒ, einer Anhalte-Bewegung des Manipulators für zumindest einen dem momentanen Takt nachfolgenden Takt tₙ. Der zumindest eine dem momentanen Takt nachfolgenden Takt tₙ muss dabei nicht unmittelbar dem momentanen Takt tₒ folgen. Der momentane Takt tₒ ist dabei als ein erster Takt zu verstehen, welcher zeitlich vor dem zumindest einen nachfolgenden Takt tₙ liegt.

Der Begriff "Simulieren" ist nicht einschränkend, und beschreibt ein Berechnen oder Vorhersagen einer Anhalte-Bewegung des Manipulators, vorzugsweise basierend auf einem momentanen Zustand, oder auch Ist-Zustand des Manipulators und einer Bahnplanung. Der Begriff "Anhalte-Bewegung" beschreibt, dass der Manipulator zum Anhalten gebracht wird, also gestoppt wird bzw. werden soll. Der Begriff "Takt" bezieht sich auf ein zeitliches Intervall, und kann beispielsweise eine Taktzeit umfassen. Mit einer Taktzeit wird ein zeitlicher Ablauf in diskrete Werte mit gleichem zeitlichen Abstand aufgeteilt. Vorzugsweise ist der Takt bzw. die Taktzeit ein sogenannter Interpolationstakt (IPO-Takt), welcher je nach den in einer Steuerungseinheit des Robotersystems eingesetzten Komponenten in einem weiten Bereich frei wählbar ist, etwa zwischen 100 µs und 12 ms.

Das erfindungsgemäße Verfahren umfasst ferner ein Feststellen, ob während der simulierten Anhalte-Bewegung des Manipulators für den zumindest einen folgenden Takt tₙ eine vorgegebene Überwachungsgrenze verletzt wird, und in Reaktion auf das Feststellen, ein Einleiten der Anhalte-Bewegung des Manipulators. Es wird somit Überprüft, ob während der simulierten Anhalte-Bewegung zumindest eine vorgegebene oder vordefinierte Überwachungsgrenze eingehalten wird. Der Fachmann versteht, dass eine vorgegebene Überwachungsgrenze applikationsspezifisch und/oder gerätespezifisch definiert sein kann. Wenn in der Simulation eine solche Überwachungsgrenze verletzt wird, wird ein Anhalten des Manipulators initiiert. Das erfindungsgemäße Verfahren erlaubt es somit, eine Anhalte-Bewegung des Manipulators rechtzeitig einzuleiten, wenn festgestellt wird, dass bei einem späteren Einleiten der Anhalte-Bewegung eine Überwachungsgrenze überschritten werden würde. Somit kann vorteilhaft verhindert werden, dass die simulierte Grenzverletzung tatsächlich eintritt. Dem Fachmann ist dabei klar, dass der Weg, den der Manipulator vom Einleiten der Anhalte-Bewegung bis zum endgültigen Stillstand zurücklegt, dabei von der Größe, dem Gewicht und weiteren Eigenheiten des Manipulators abhängt und teilweise erheblich sein kann. Bei mittelschweren Industrierobotern können z.B. nach dem Einleiten der Anhalte-Bewegung bis zum endgültigen Stillstand noch Achsschwenkungen um 90° vorkommen.

Vorzugsweise erfolgt die Anhalte-Bewegung durch Bremsen, und weiter vorzugsweise durch Nullsetzen einer Soll-Geschwindigkeit und/oder durch Nullsetzen eines Soll-Override-Wertes. Diese Merkmale können sowohl im Schritt des Simulierens der Anhalte-Bewegung als auch im Schritt des Einleitens der Anhalte-Bewegung berücksichtigt werden. Der Fachmann versteht, dass die Soll-Geschwindigkeit ein der Robotersteuerung vorgegebener Parameter sein kann, welcher möglicherweise nicht in einem Takt umgesetzt werden kann, da beispielsweise Gelenkantriebe die hierzu erforderlichen Kräfte und Momente nicht aufbringen können. Durch schrittweises Anpassen der Ist-Geschwindigkeit an die (nullgesetzte) Soll-Geschwindigkeit kann somit die Anhalte-Bewegung materialschonend erfolgen. Insbesondere versteht der Fachmann, dass die Geschwindigkeit eine Bahngeschwindigkeit des Manipulators umfassen kann. Analog kann ein vorgegebener Soll-Override-Wert möglicherweise nicht sofort oder nicht in einem einzigen Takt umgesetzt werden. Dem Fachmann ist deshalb bekannt, dass ein Ist-Override-Wert schrittweise an einen Soll-Override-Wert angepasst werden kann, insbesondere wenn letzterer Nullgesetzt wird. Durch solch eine Anhalte-Bewegung kommt es somit zu einer sogenannten Geschwindigkeitskappung. Mit dem erfindungsgemäßen Verfahren kann somit vorteilhaft ein solches Anhalten bzw. Stillsetzen eines Manipulators simuliert bzw. vorhergesagt werden. Wenn bei einer solchen Simulation Überwachungsgrenzen überschritten werden, kann vorteilhaft durch Einleiten einer Anhalte-Bewegung eine tatsächliche Überschreitung der Grenze verhindert werden.

Vorzugsweise erfolgt das Simulieren der Anhalte-Bewegung zu Beginn des momentanen Taktes tₒ. Ein Takt hat eine bestimmte zeitliche Länge, sodass das Simulieren zu unterschiedlichen Zeiten während des Taktes stattfinden kann. Vorteilhaft findet dies jedoch anfänglich, und insbesondere so früh wie möglich, innerhalb des Taktes oder sogar direkt zu Beginn des Taktes statt. Somit wird sichergestellt, dass während des Taktes nach der Simulation gewissermaßen genügend Zeit bleibt, um auf eine eventuell in der Simulation festgestellte Verletzung einer Überwachungsgrenze zu reagieren, sodass eine tatsächliche Verletzung effektiv verhindert wird.

Vorzugsweise erfolgt das Einleiten der Anhalte-Bewegung in Reaktion auf das Feststellen im momentanen Takt tₒ. Es wird also bereits im momentanen Takt tₒ auf eine festgestellte Verletzung einer Überwachungsgrenze reagiert. Das Einleiten einer Anhalte-Bewegung im momentanen Takt tₒ ist dabei vorteilhaft, da während dieser Bewegung keine Überwachungsgrenzen verletzt werden. Andernfalls wäre eine solche Verletzung bereits während einer Simulation in einem vorangegangenen Takt festgestellt worden, woraufhin die Anhalte-Bewegung bereits in dem vorangegangenen Takt eingeleitet worden wäre. Folglich wird mit dem erfindungsgemäßen Verfahren überprüft, ob eine zukünftig eingeleitete Anhalte-Bewegung problemlos (d.h. ohne Überwachungsgrenzen zu verletzen) stattfinden kann. Falls dies nicht der Fall ist, wird vorzugsweise sofort die Anhalte-Bewegung eingeleitet. Die problemlose Realisierung dieser sofort eingeleiteten Anhalte-Bewegung wurde bereits in der Vergangenheit (also in einem vorangegangenen Takt) überprüft. Somit können vorteilhaft Grenzverletzungen, die durch Anhalte-Bewegungen hervorgerufen werden können, effektiv vermieden werden.

Vorzugsweise umfasst das Simulieren der Anhalte-Bewegung ein Simulieren der Einleitung der Anhalte-Bewegung für einen dem momentanen Takt unmittelbar folgenden Takt t₁. Das Simulieren umfasst somit ein Simulieren einer Anhalte-Bewegung, welche in dem unmittelbar folgenden Takt t₁ eingeleitet wird. Somit kann überprüft werden, ob das Einleiten einer Anhalte-Bewegung im unmittelbar folgenden Takt noch zulässig ist oder ob dies bereits zu Überschreitungen von Überwachungsgrenzen führt. In letzterem Fall wird entsprechend reagiert, indem vorzugsweise sofort die Anhalte-Bewegung des Manipulators in Takt tₒ eingeleitet wird.

Vorzugsweise erfolgt das Simulieren der Anhalte-Bewegung für zumindest einen dem momentanen Takt nachfolgenden Takt tₙ basierend auf der simulierten Einleitung der Anhalte-Bewegung für den dem momentanen Takt unmittelbar folgenden Takt t₁. Somit basiert beispielsweise die Simulation der Anhalte-Bewegung für den fünftnächsten Takt t₅ auf der Annahme, dass in dem unmittelbar folgenden Takt t₁ die Anhalte-Bewegung eingeleitet wurde. Wenn für diesen fünftnächsten Takt t₅ dennoch eine Verletzung einer Überwachungsgrenze aus der Simulation festgestellt wurde, ist eine Anhalte-Bewegung, die in dem unmittelbar folgenden Takt t₁ eingeleitet wird, somit nicht zulässig und muss vorteilhaft bereits im momentanen Takt tₒ eingeleitet werden, um ein zuverlässiges Einhalten von Überwachungsgrenzen zu garantieren.

Vorzugsweise erfolgt das Simulieren basierend zumindest auf einer momentanen Pose des Manipulators und/oder einer Bahnplanung. Die Vorhersage bzw. Simulation der Anhalte-Bewegung kann dabei auch vorteilhaft auf weiteren Zuständen sowohl des Manipulators, des Robotersystems als auch der Umgebung basieren. Somit wird ein zuverlässiges Betreiben des Manipulators ermöglicht.

Vorzugsweise umfasst die vorgegebene Überwachungsgrenze zumindest eine der folgenden: eine vorgegebene Arbeitsraumgrenze, wobei die Arbeitsraumgrenze weiter vorzugsweise in kartesischen oder achsspezifischen Koordinaten definiert ist, eine vorgegebene maximale Achsgeschwindigkeit für zumindest eine Achse des Manipulators, eine vorgegebene maximale Werkzeuggeschwindigkeit, und/oder eine vorgegebene maximale Flansch-Geschwindigkeit oder eine vorgegebene maximale Werkzeugarbeitspunkt-Geschwindigkeit. Der Fachmann versteht, dass ein Manipulator anhand diverser Überwachungsgrenzen bzw. Überwachungskriterien überwacht und gesteuert werden kann. Insbesondere können die Überwachungsgrenzen in Bezug auf einen Betriebsmodus gesetzt werden. Abhängig von der Verwendung und dem Aufbau des Manipulators kann der Fachmann geeignete Überwachungsgrenzen wählen und somit für das erfindungsgemäße Verfahren vorgeben. Somit können beispielsweise kritische Punkte der Roboterkinematik (wie etwa Geschwindigkeit der Gelenkpositionen) begrenzt werden. Ferner können beispielsweise die Geschwindigkeiten mehrerer alternativer TCPs geeignet begrenzt werden. Ferner können mittels des erfindungsgemäßen Verfahrens auch auf höheren Achsableitungen basierende Werte (wie z.B. Achsbeschleunigung) und daraus ableitbare Größen (wie z.B. Motor- und Getriebemomente) begrenzt werden und ein Überschreiten solcher Werte verhindert werden.

Vorzugsweise umfasst das Simulieren der Anhalte-Bewegung ein Berechnen einer Geschwindigkeit des Manipulators und/oder ein Berechnen eines Ist-Override-Wertes und/oder ein Berechnen eines Ist-Zustandes des Manipulators für den zumindest einen dem momentanen Takt nachfolgenden Takt tₙ. Aus dem Verlauf dieser Werte können beispielsweise Roboterposen kartesisch und achsspezifisch exakt bis zum Stopp des Manipulators (d.h. beispielsweise bis zum Erreichen des Ist-Override-Wertes von Null) vorhergesagt werden. Aus diesem Positionsverlauf lassen sich problemlos alle relevanten Überwachungsgrößen bis zum Stopp des Manipulators präzise vorhersagen.

Vorzugsweise wird das Simulieren der Anhalte-Bewegung des Manipulators für jeden dem momentanen Takt nachfolgenden Takt tₙ bis zu einem simulierten Stillstand des Manipulators durchgeführt. Somit wird die Anhalte-Bewegung für alle Takte tₙ simuliert, in denen der Manipulator noch nicht zum Stillstand gekommen ist, also beispielsweise ein Ist-Override-Wert von größer Null vorliegt. Vorzugsweise wird die Simulation allerdings beendet, wenn eine Verletzung einer Überwachungsgrenze festgestellt wurde. Somit kann effizient direkt die Anhalte-Bewegung des Manipulators eingeleitet werden.

Vorzugsweise umfasst das erfindungsgemäße Verfahren, vorzugsweise vor dem Simulieren der Anhalte-Bewegung, weiterhin ein Ermitteln, zu Beginn des momentanen Taktes, eines Ist-Zustandes des Manipulators für den momentanen Takt, basierend zumindest auf einer Soll-Geschwindigkeit für den momentanen Takt. Ferner umfasst das erfindungsgemäße Verfahren vorzugsweise ein Bestimmen, ob basierend auf dem ermittelten Ist-Zustand des Manipulators eine vorgegebene Überwachungsgrenze verletzt wird, und ein Reduzieren, in Reaktion auf das Bestimmen, der Soll-Geschwindigkeit für den aktuellen Takt. Somit wird überprüft, ob basierend auf der Soll-Geschwindigkeit, die beispielsweise der Robotersteuerung vorliegt, in dem momentanen Takt eine Überwachungsgrenze verletzt wird. Vorzugsweise kann die Soll-Geschwindigkeit einen Soll-Override umfassen. Somit kann durch eine Reduzierung der Soll-Geschwindigkeit für den momentanen Takt eine solche Überschreitung einer Überwachungsgrenze verhindert werden.

Ein Einleiten einer Anhalte-Bewegung aufgrund des Bestimmens ist dabei nicht erforderlich, da bereits entsprechend dem erfindungsgemäßen Verfahren in einem vorangegangenen Takt die Zulässigkeit einer Bewegung während des momentanen Taktes geprüft wurde. Somit wird vorteilhaft gewährleistet, dass während des momentanen Taktes keine Überwachungsgrenzen verletzt werden und dass durch Einleiten einer Anhalte-Bewegung im unmittelbar folgenden Takt keine unzulässigen Verletzungen von Überwachungsgrenzen resultieren würden.

Weiter vorzugsweise umfasst der Ist-Zustand des Manipulators kartesische und achsspezifische Manipulator-Positionen und/oder Manipulator-Bewegungsdaten. Der Fachmann versteht, dass der Ist-Zustand nicht nur statische Information über den Manipulator widerspiegelt, sondern auch dynamische Eigenschaften umfasst. Insbesondere kann anhand des Ist-Zustandes somit ein Überwachen aller relevanten Überwachungsgrößen geschehen.

Weiter vorzugsweise erfolgt das Ermitteln des Ist-Zustandes des Manipulators für den momentanen Takt weiterhin basierend auf einer momentanen Pose des Manipulators und/oder einer Bahnplanung. Somit kann präzise eine Vorhersage über die Zustände des Roboters während des momentanen Taktes getroffen werden.

Ein erfindungsgemäßes Robotersystem umfasst einen Manipulator, und insbesondere einen Gelenkarmroboter, als auch eine Steuerungseinrichtung. Letztere ist dabei eingerichtet das erfindungsgemäße Verfahren zum Steuern eines Manipulators auszuführen.

Mittels des erfindungsgemäßen Verfahrens können alle Überwachungsgrenzen immer zuverlässig eingehalten werden, wobei die Kappung, bzw. Einleitung einer Anhalte-Bewegung möglichst nah an die Überwachungsgrenzen herankommt. Das erfindungsgemäße Verfahren und insbesondere das erfindungsgemäße Robotersystem eignet sich dabei aufgrund der Vorausschau bzw. Vorhersage für den momentanen Takt und/oder für folgende Takte auch für das sichere und präzise Verfahren mittels Spline-Interpolation.

### 4. Ausführungsbeispiele

Im Folgenden wird die vorliegende Erfindung anhand der beiliegenden Figur näher beschrieben. Es zeigt:

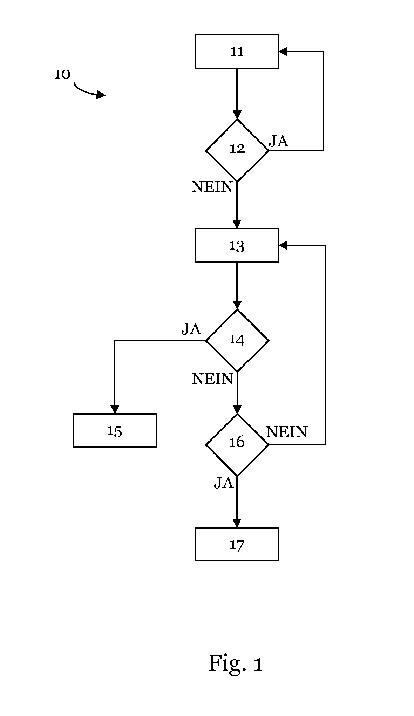

- Fig. 1: schematisch den Ablauf eines erfindungsgemäßen Verfahrens zum Steuern eines Manipulators.

In Fig. 1 ist schematisch und beispielhaft der Ablauf eines erfindungsgemäßen Verfahrens 10 zum Steuern eines Manipulators dargestellt. Die dargestellten Prozesse finden dabei vorzugsweise zu Beginn eines momentanen Taktes statt, welcher im Folgenden als Takt tₒ bezeichnet wird.

Das Verfahren 10 beginnt in Schritt 11, in welchem im Takt tₒ ein neuer Ist-Override-Wert ermittelt wird, welcher sich aufgrund eines vorgegebenen Soll-Override-Wertes ergäbe. Alternativ kann auch ermittelt werden, welche Ist-Bahngeschwindigkeit sich basierend auf einer vorgegebenen Soll-Bahngeschwindigkeit ergäbe. Basierend auf dem ermittelten Ist-Override-Wert werden kartesische und achsspezifische Roboterpositionen und alle relevanten, d.h. zu überwachenden Ableitungen dieser Positionsdaten für den Takt tₒ ermittelt.

Im folgenden Schritt 12 wird bestimmt bzw. überprüft, ob bereits aufgrund der im Schritt 11 ermittelten Werte eine Überwachungsgröße während dem Takt tₒ verletzt werden würde. Falls diese Entscheidung 12 positiv ausfällt, wird der Soll-Override-Wert, oder alternativ die Soll-Bahngeschwindigkeit reduziert und anschließend das Verfahren in Schritt 11 mit dem reduzierten Soll-Override-Wert bzw. der reduzierten Soll-Bahngeschwindigkeit fortgeführt. Dieser Ablauf wiederholt sich, bis ein kritischer (maximaler) Ist-Override-Wert ermittelt wurde, mit welchem keine Überwachungsgrößen im Takt tₒ verletzt werden würden, sodass die Entscheidung 12 negativ ausfällt.

Wenn die Entscheidung 12 negativ ausfällt, wird im Schritt 13 ein Ist-Override-Wert für den folgenden Takt tᵢ = t₁ simuliert. D.h. es wird simuliert, was passiert, wenn im Takt t₁ eine Anhalte-Bewegung eingeleitet werden würde, also der Soll-Override im Takt t₁ Nullgesetzt werden würde. Zu dem Ist-Override-Wert werden kartesische und achsspezifische Daten des Manipulators für den Takt t₁ bestimmt. Aus diesen simulierten Positionen werden dann die zu überwachenden Ableitungen, wie z.B. die Flanschgeschwindigkeit, ermittelt. Im Zuge der Simulation dieser in Takt t₁ eingeleiteten Anhalte-Bewegung berechnet die Steuerung die Bahn des Manipulators bzw. des TCP für alle Folgetakte t₂ bis t_{Stillstand}. Sollte diese simulierte Bahn zu einer Grenzverletzung führen, endet die Simulation und die Anhalte-Bewegung wird sofort im Takt tₒ eingeleitet. Dieser Ablauf ist in Figur 1 beispielhaft wie folgt dargestellt:
In der Entscheidung 14 wird festgestellt bzw. überprüft, ob basierend auf den in Schritt 13 ermittelten Größen bereits im Takt t₁ zumindest eine relevante Überwachungsgrenze überschritten werden würde. Falls diese Entscheidung 14 positiv ausfällt, wird im Schritt 15 die Simulation in dem momentanen Takt tₒ beendet und der Soll-Override-Wert für den momentanen Takt tₒ sofort Nullgesetzt, also eine Anhalte-Bewegung eingeleitet. Alternativ kann auch eine Soll-Bahngeschwindigkeit Nullgesetzt werden. Die Zuverlässigkeit der in den folgenden Takten resultierenden Ist-Override-Werte wurde bereits während dem vorangegangenen Takt t₋₁ gewährleistet.

Falls die Entscheidung 14 hingegen negativ ausfällt, wird in einer folgenden Entscheidung 16 überprüft, ob der für den Simulationstakt t₁ ermittelte Ist-Override-Wert Null ist, also ob der Manipulator in der Simulation bei Takt t₁ zum Stillstand gekommen ist. Wenn dies nicht der Fall ist, wird die zu simulierende Taktzeit um Eins erhöht (tᵢ₌ᵢ₊₁) und das Verfahren im Schritt 13 für diesen nächsten Takt fortgesetzt. D.h. es wird für den Takt t₂ simuliert, wo sich der Manipulator bzw. der TCP befindet, basierend auf der in Takt t₁ (simuliert) eingeleiteten Anhalte-Bewegung.

In Entscheidung 14 wird dann geprüft, ob im Takt t₂ eine Überwachungsgrenze verletzt werden würde. Falls ja, wird gemäß Schritt 15 die Simulation beendet und der Soll-Override-Wert für den momentanen Takt tₒ sofort Nullgesetzt, also eine Anhalte-Bewegung eingeleitet. Andernfalls wird überprüft, bei Entscheidung 16, ob der für den Simulationstakt t₂ ermittelte Ist-Override-Wert bereits Null ist, also ob der Manipulator in der Simulation bei Takt t₂ zum Stillstand gekommen ist. Wenn dies nicht der Fall ist, wird die zu simulierende Taktzeit erneut um Eins erhöht (tᵢ₌ᵢ₊₁) und das Verfahren im Schritt 13 für den Takt t₃ simuliert, usw.

Wenn die Entscheidung 16 positiv ausfällt, der Manipulator also in der Simulation für z.B. den Takt t₁₅ zu einem Stopp kam, wird im folgenden Schritt 17 die Simulation in dem momentanen Takt tₒ beendet und der zuvor in den Schritten 11, 12 ermittelte maximale Ist-Override-Wert als tatsächlicher Ist-Override-Wert für den momentanen Takt tₒ verwendet und der Manipulator basierend auf diesem Wert gesteuert.

Das Verfahren startet dann im nächsten Takt t₁ erneut, welcher dann dem momentanen Takt entspricht.

## Patentansprüche

1. Verfahren zum Steuern eines Manipulators, insbesondere eines Gelenkarmroboters, aufweisend:
Simulieren, in einem momentanen Takt (tₒ), einer Anhalte-Bewegung des Manipulators für zumindest einen dem momentanen Takt nachfolgenden Takt (tₙ);
Feststellen, ob während der simulierten Anhalte-Bewegung des Manipulators für den zumindest einen folgenden Takt (tₙ) eine vorgegebene Überwachungsgrenze verletzt wird, und
Einleiten, in Reaktion auf das Feststellen, der Anhalte-Bewegung des Manipulators.

2. Verfahren nach Anspruch 1, wobei die Anhalte-Bewegung durch Bremsen, und vorzugsweise durch Nullsetzen einer Soll-Geschwindigkeit und/oder durch Nullsetzen eines Soll-Override-Wertes erfolgt.

3. Verfahren nach Anspruch 1 oder 2, wobei das Simulieren der Anhalte-Bewegung zu Beginn des momentanen Taktes (tₒ) erfolgt.

4. Verfahren nach einem der vorangegangenen Ansprüche, wobei das Einleiten der Anhalte-Bewegung in Reaktion auf das Feststellen im momentanen Takt (tₒ) erfolgt.

5. Verfahren nach einem der vorangegangenen Ansprüche, wobei das Simulieren der Anhalte-Bewegung ein Simulieren der Einleitung der Anhalte-Bewegung für einen dem momentanen Takt unmittelbar folgenden Takt (t₁) umfasst.

6. Verfahren nach dem vorangegangenen Anspruch, wobei das Simulieren der Anhalte-Bewegung für zumindest einen dem momentanen Takt folgenden Takt (tₙ) basierend auf der simulierten Einleitung der Anhalte-Bewegung für den dem momentanen Takt unmittelbar folgenden Takt (t₁) erfolgt.

7. Verfahren nach einem der vorangegangenen Ansprüche, wobei das Simulieren basierend zumindest auf einer momentanen Pose des Manipulators und/oder einer Bahnplanung erfolgt.

8. Verfahren nach einem der vorangegangenen Ansprüche, wobei die vorgegebene Überwachungsgrenze zumindest eine der folgenden umfasst:
eine vorgegebene Arbeitsraumgrenze, wobei die Arbeitsraumgrenze vorzugsweise in kartesischen oder achsspezifischen Koordinaten definiert ist,
eine vorgegebene maximale Achsgeschwindigkeit für zumindest eine Achse des Manipulators,
eine vorgegebene maximale Werkzeuggeschwindigkeit,
eine vorgegebene maximale Flansch-Geschwindigkeit, und/oder
eine vorgegebene maximale Werkzeugarbeitspunkt-Geschwindigkeit.

9. Verfahren nach einem der vorangegangenen Ansprüche, wobei das Simulieren der Anhalte-Bewegung ein Berechnen einer Geschwindigkeit des Manipulators und/oder ein Berechnen eines Ist-Override-Wertes und/oder ein Berechnen eines Ist-Zustandes des Manipulators für den zumindest einen dem momentanen Takt nachfolgenden Takt (tₙ) umfasst.

10. Verfahren nach einem der vorangegangenen Ansprüche, wobei das Simulieren der Anhalte-Bewegung des Manipulators für jeden dem momentanen Takt nachfolgenden Takt (tₙ) bis zu einem simulierten Stillstand des Manipulators durchgeführt wird.

11. Verfahren nach einem der vorangegangenen Ansprüche, weiterhin aufweisend:
Ermitteln, zu Beginn des momentanen Taktes, eines Ist-Zustandes des Manipulators für den momentanen Takt, basierend zumindest auf einer Soll-Geschwindigkeit für den momentanen Takt;
Bestimmen, ob basierend auf dem ermittelten Ist-Zustand des Manipulators eine vorgegebene Überwachungsgrenze verletzt wird, und
Reduzieren, in Reaktion auf das Bestimmen, der Soll-Geschwindigkeit für den momentanen Takt.

12. Verfahren nach dem vorangegangenen Anspruch, wobei der Ist-Zustand des Manipulators kartesische und achsspezifische Manipulator-Positionen und/oder Manipulator-Bewegungsdaten umfasst.

13. Verfahren nach einem der Ansprüche 11 - 12, wobei das Ermitteln des Ist-Zustandes des Manipulators für den momentanen Takt weiterhin basierend auf einer momentanen Pose des Manipulators und/oder einer Bahnplanung erfolgt.

14. Robotersystem, umfassend einen Manipulator, insbesondere einen Gelenkarmroboter, und eine Steuerungseinrichtung, welche eingerichtet ist ein Verfahren zum Steuern eines Manipulators gemäß einem der voranstehenden Verfahrensansprüche auszuführen.
